# EUROPÄISCHE PATENTSCHRIFT

(11) **EP 1 201 529 B1**
(45) Veröffentlichungstag und Bekanntmachung des Hinweises auf die Patenterteilung: **09.04.2008**
(21) Anmeldenummer: 01125626.0
(22) Anmeldetag: 26.10.2001
(51) Int. Cl.: B62D 15/02

(54) **Verfahren und Einrichtung zur Bestimmung eines Lenkwinkels eines Kraftfahrzeuges**
Motor vehicle steering angle determination method and apparatus
Procédé et dispositif pour la détermination de l'angle de braquage d'un véhicule

(30) Priorität: 27.10.2000 DE 10053719; 21.11.2000 DE 10057674
(43) Veröffentlichungstag der Anmeldung: 02.05.2002
(73) Patentinhaber: VDO Automotive AG, 93055 Regensburg (DE)
(72) Erfinder: Berg, Philipp, 65191 Wiesbaden (DE); Porth, Wolfgang, 60388 Frankfurt (DE)

(56) Entgegenhaltungen:
- EP-A- 0 376 456
- EP-A- 0 410 583
- US-A- 4 853 672
- US-A- 4 953 650
- US-A- 5 791 432

## Beschreibung

Die Erfindung betrifft ein Verfahren zur Bestimmung eines Lenkwinkels eines Kraftfahrzeuges sowie eine Einrichtung zur Durchführung des Verfahrens.

In Kraftfahrzeugen werden in zunehmendem Maße elektrische Lenkhilfen eingesetzt. Diese benötigen für die Funktion neben den mechanischen Komponenten wie Lenkwelle und Getriebe auch elektrische und elektronische Bestandteile, wie eine Stellvorrichtung (Elektromotor), eine elektronische Steuereinheit und Sensorik. Neben der für die grundsätzliche Funktion einer Servolenkung benötigten Sensorik zur Erfassung des Momentes, welches der Fahrer auf das Lenkrad aufbringt, wird zur Realisierung von zusätzlichen Komfort- und Sicherheitsfunktionen (Aktive Dämpfung / Aktive Rückstellung) eine Sensorik zur Erfassung der Lenkungsposition (z. B. Lenkradwinkel) benötigt.

An der Lenkwelle angebrachte Lenkwinkelsensoren, wie sie heutzutage vor allem in ESP-Systemen verwendet werden, müssen den Drehwinkel der Lenksäule in einem Bereich erfassen, welcher größer als eine Umdrehung der Lenkwelle ist. Zur Erfassung der absoluten Position der Lenkwelle werden üblicherweise teure Multi turn - Sensoren eingesetzt

In EP 0 410 583 A1, die den Oberbegriff der Ansprüche 1 und 5 bildet, wird eine Vorrichtung zur Bestimmung der Position einer Zahnstange offenbart, bei welcher der Lenkwinkel eines Lenkgetriebes eines Kraftfahrzeugs ermittelt wird indem die lineare Verschiebung der Zahnstange im Hinblick auf das Gehäuse bestimmt wird. Die Anordnung beschreibt die Detektierung und Erfassung des Winkels an der Zahnstange.

Aus US 4,953,650 ist ein Lenksteuersystem für die Räder der Hinterachse eines Kraftfahrzeuges bekannt, bei welchem der Lenkwinkel der Fronträder mittels eines winkelsensors im Zusammenhang mit dem Signal eines Lenksensors des Lenkrades erfasst wird. Der Lenkwinkel der Hinterräder wird erfasst über die Verschiebung von Relaiskontakten in Verbindung mit einem Motorencodersignal.

Das Dokument US 5,791,432 offenbart eine Vorrichtung zur Steuerung eines Lenksystems eines Kraftfahrzeuges, welches einen Aktor zur Betätigung eines Lenkmechanismus und einen Lenkwinkelsensor zur Erfassung des aktuellen Lenkwinkels umfasst. Ferner weist die Vorrichtung eine erste Kontrolleinheit zur Vorgabe eines gewünschten Lenkwinkels und eine zweite Kontrolleinheit, welche den Aktor in Abhängigkeit der Differenz zwischen dem gewünschten und dem aktuellen Lenkwinkel steuert, auf.

Der Erfindung liegt die Aufgabe zugrunde, ein Verfahren und eine Einrichtung zur Bestimmung des Lenkwinkels anzugeben, mit welchen eine einfache, zuverlässige und genaue Erfassung der Absolutposition der Lenksäule möglich ist.

Erfindungsgemäß wird die Aufgabe dadurch gelöst, dass der durch einen Lenkradeinschlag verursachte Verschiebeweg einer Zahnstange eines Lenkgetriebes detektiert wird, aus welchem der Lenkwinkel unter Berücksichtigung eines vorgegebenen Übersetzungsverhältnisses zwischen Lenkradwinkel und Zahnstangenweg bestimmt wird und der Lenkwinkel durch ein zur Kommutierung genutztes Motorpositionssignal eines zur Lenkunterstützung vorgesehenen Antriebsmotors plausibilisiert wird.

Der Vorteil der Lenkwinkelerfassung an der Zahnstange besteht darin, dass die Lenkungsposition über den gesamten Lenkradeinschlagwinkel eindeutig erfasst werden kann, wogegen diese Messaufgabe bei einem Lenkwinkelsensor an der Lenksäule einen zusätzlichen Umdrehungszähler erforderlich macht.

Die Größen stehen über geometrisch festgelegte Übersetzungsverhältnisse in einem festen Zusammenhang.

Somit entfallen aufwendige Auswerteverfahren zur Bestimmung der Absolutposition. Der Einsatz teurer Multiturn-Sensoren ist nicht notwendig. Der Verzicht auf mechanische Teile wie Umdrehungszähler, Lagerung des Lenkwinkelsensor im Eingriff unterbindet Verschleiß, Reibungsverluste und Laufgeräusche des Übersetzungsgetriebes der Multiturn Sensoren.

Des Weiteren wird der an sich für eine andere Systemfunktion innerhalb der Servolenkung im Kraftfahrzeug vorhandene Motorwinkelsensor zur Plausibilisierung des Lenkwinkels genutzt. Auch die Winkelstellung des Elektromotors steht über ein festes Übersetzungsverhältnis mit Lenkradwinkel, Zahnstangenweg und Fahrzeugradeinschlagwinkel in einem vorgegebenen Zusammenhang. Auf zusätzliche Hilfsmittel zur Erzeugung redundanter Signale kann somit verzichtet werden.

In einer Ausgestaltung wird der Lenkwinkel zum Einsatz für mindestens eine Lenkzusatzfunktion, wie aktive Dämpfung und/oder Lenkrückstellung ermittelt.

Der einmal für die Lenkzusatzfunktion bestimmte Lenkwinkel wird der Ermittlung weiterer Fahrzeugfunktionen zugrunde gelegt. Das Lenkwinkelsignal ist absolut und unmittelbar nach dem Einschalten des Systems vorhanden d. h. es ist immer eine direkte Signalerfassung vorhanden.

In einer anderen Ausgestaltung der Erfindung ist eine Einrichtung zur Ermittlung des Lenkwinkels eines Kraftfahrzeuges vorgesehen, bei welchem ein Lenkgetriebe mit einer Spurstange verbunden ist, wobei ein Positionssensor an dem als Zahnstangengetriebe ausgebildeten Lenkgetriebe angeordnet ist und die mittels des Positionssensors erfasste Position des Zahnstangengetriebes der absoluten Stellung einer Lenkwelle entspricht, der lineare Positionssensor mit einem Steuergerät verbunden ist und das Steuergerät zur Plausibilisierung des Lenkwinkelsignals mit einem für die Kommutierung des Antriebsmotors genutzten Motorwinkelsensors verbunden ist, welcher an dem Antriebsmotor angeordnet ist, der zur Lenkunterstützung in einer Wirkverbindung mit dem mit der Lenkwelle verbundenen Lenkgetriebe steht.

Zur Bestimmung des Lenkwinkels ist der Positionssensor mit einem Steuergerät verbunden, welches aus dem Verschiebeweg der Zahnstange des Zahnstangengetriebes den Lenkwinkel und/oder die Lenkgeschwindigkeit und/oder der Lenkrichtung berechnet.

Der Vorteil dieser Erfindung besteht darin, dass durch die Messung des Zahnstangenweges anstelle des Verdrehwinkels der Lenksäule eine eindeutige Zuordnung von Lenkwinkel und Zahnstange erreicht wird. Der Zahnstangenweg steht über ein eindeutiges Übersetzungsverhältnis mit dem Lenkradwinkel in Verbindung.

Somit entfallen aufwendige Auswerteverfahren zur Bestimmung der Absolutposition. Der Einsatz teurer Multiturn-Sensoren ist nicht notwendig.

Das Signal des Wegsensors wird dabei durch das Signal eines für die Kommutierung des Antriebsmotors ohnehin benötigten Motorwinkelsensors plausibilisiert. Motorwinkel und Zahnstangenweg stehen in proportionalem Zusammenhang, so dass eine redundante Signalerfassung durch das Steuergerät möglich ist. Auf diese Art und Weise wird die Funktionssicherheit des zu erfassenden Lenkwinkelsignals erhöht. An sich vorhandene Sensorik kann mit benutzt werden.

In einer Ausgestaltung ist das erste Steuergerät über eine Datenleitung mit mindestens einem weiteren Steuergerät verbunden, über welche der vom ersten Steuergerät ermittelte Lenkwinkel und/oder Lenkgeschwindigkeit und/oder die Lenkrichtung übertragbar ist, wobei das zweite Steuergerät den Lenkwinkel und/oder die Lenkgeschwindigkeit und/oder die Lenkrichtung für seine Steuer- und/oder Regelfunktionen weiterverarbeitet.

Durch die Nutzung vorhandener Schnittstellen des ersten Steuergerätes, beispielsweise des Steuergerätes für Servolenkung kann auf kostenintensive Winkelsensoren für das ESP- Steuergerät verzichtet werden.

Eine besonders einfache und kostengünstige Variante wird erreicht, wenn der lineare Positionssensor zur Erfassung der Position des Zahnstangengetriebes nach einem berührungslosen Wirkprinzip arbeitet.

Vorteilhafterweise weist der lineare Positionssensor eine Magneteinrichtung und eine induktive Sensoreinheit auf, wobei die Magneteinrichtung mit der Zahnstange des Zahnstangesgetriebes fest verbunden ist und die induktive Sensoreinheit in/oder an einem Gehäuse des Zahnstangengetriebes angeordnet ist, wobei sich die induktive Sensoreinheit über annähernd den gesamten Verschiebeweg der Zahnstange ausdehnt. Durch diese Anordnung wird ein besonders einfacher Aufbau des Systems möglich.

In einer Weiterbildung der Erfindung ist die induktive Sensoreinheit außen an dem Gehäuse des Lenkgetriebes befestigt. Dabei erfasst die induktive Sensoreinheit die Position des Permanentmagneten durch die Gehäusewandung des Lenkgetriebegehäuses. Das Gehäuse besteht aus einem nicht ferromagnetischen Material, beispielsweise Aluminium-Guß. Der Sensor ist somit integraler Bestandteil der Servolenkung.

Vorteilhafterweise ist die Magneteinrichtung mechanisch an der Zahnstange arretiert. Die Magneteinrichtung kann dabei den Umfang der Zahnstange annähernd umfassen. Alternativ dazu ist die Magneteinrichtung in einem Magnetgehäuse angeordnet, welches mit mindestens einem Mittel zur form- und/oder kraftschlüssigen Befestigung an der Zahnstange befestigt ist.

Eine besonders stabile Befestigung läßt sich erreichen, wenn die Zahnstange hohl gebohrt ist und das Befestigungsmittel durch eine Bohrung der Zahnstange diese im Inneren hintergreifend angeordnet ist.

Eine einfache Herstellungsweise ist möglich, wenn das Magnetgehäuse und das Befestigungsmittel einstückig als Kunststoffspritzteil ausgebildet sind.

In einer einfachen Ausgestaltung weist das Gehäuse des Zahnstangengetriebes eine in der Ersteckungsrichtung der Zahnstange ausgebildete Magnetaufnahme auf. In dieser Magnetaufnahme wird die Magneteinrichtung reibungsfrei innerhalb des Lenkgetriebegehäuses entlang der induktiven Auswerteeinheit geführt, welche ein der Position des Magneten entsprechendes elektrisches Signal abgibt, das den Drehwinkel der Lenksäule entspricht.

Die Erfindung läßt zahlreiche Ausführungsformen zu. Eine davon soll anhand der in der Zeichnung dargestellten Figuren näher erläutert werden.

Es zeigt:
- Figur 1:: erfindungsgemäße Lenkhilfe
- Figur 2:: Zahnstangenlenkgetriebe
- Figur 3:: Querschnitt durch das Lenkgetriebe

Gleiche Merkmale sind mit gleichen Bezugszeichen versehen.

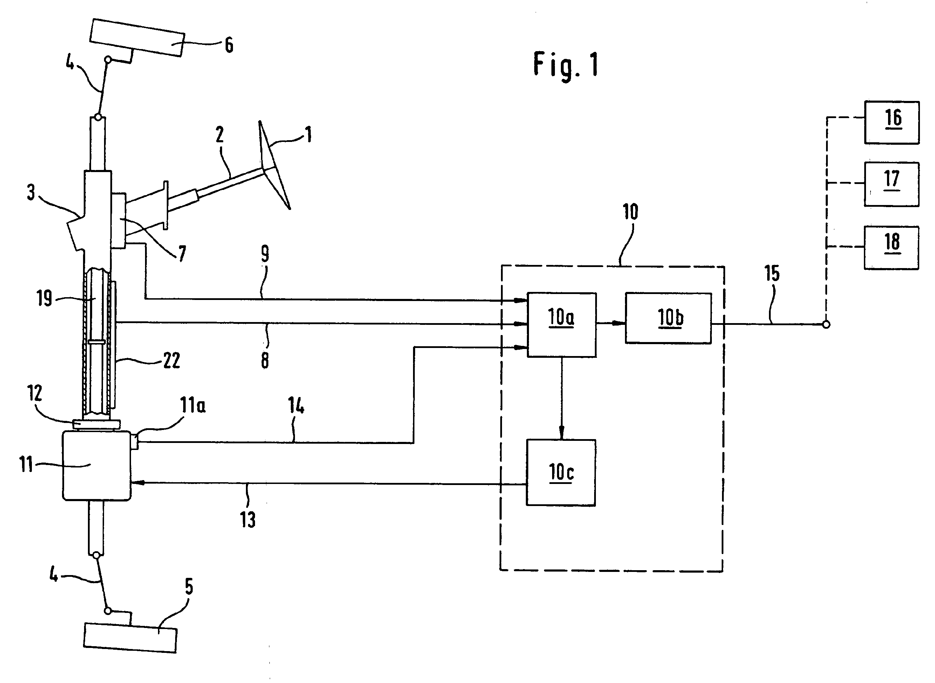

Figur 1 zeigt schematisch eine erfindungsgemäße Einrichtung zur Lenkhilfeunterstützung. Eine das Lenkrad 1 tragende Lenksäule 2 greift in ein Lenkgetriebe 3 ein, welches über ein Lenkgestänge 4 die beiden Vorderräder 5, 6 eines Kraftfahrzeuges bewegt.

An der Lenksäule 2 ist ein Lenkmomentensensor 7 angeordnet, der über die Leitung 9 mit einem Steuergerät 10 verbunden ist.

Am Lenkgetriebe 3 ist ein linearer Wegsensor 22 angeordnet, welcher über die Leitung 8 Sensorsignale, die dem Drehwinkel der Lenksäule 2 entsprechen, an das Steuergerät 10 ausgibt. Ein Elektromotor 11 ist über ein Kugelumlaufgetriebe 12 mit der Zahnstange 19 des Lenkgetriebes 3 verbunden. Darüber hinaus wird über eine weitere Leitung 14 die von einem Motorpositionssensor 11a detektierte Stellung des Elektromotors 11 an das Steuergerät 10 gemeldet . Über eine weitere Leitung 13 steuert das Steuergerät 10 den Elektromotor 13 über seine Endstufe 10b in Abhängigkeit von dem vom Lenkmomentsensor 7 gelieferten Signal an, wodurch die mittels des Lenkrades 1 ausgeführte Lenkbewegung unterstützt wird.

Das Steuergerät 10 besteht neben der Endstufe 10b aus einem Controller 10a, der über eine Schnittstelle 10c mit einer Datenleitung 15 verbunden ist. Diese Datenleitung 15, vorzugsweise ein Can-Bus, verbindet das Steuergerät 10 mit weiteren Steuergeräten des Fahrzeuges z. B. einem Steuergerät 16 für ein elektronisches Stabilitätsprogramm (ESP), einem ACC - Steuergerät 17 (Abstandsregelung) und einem Navigationsgerät 18. Darüber hinaus erhält das Steuergerät 10 über den Can-Bus 15 z. B. Informationen über die Fahrzeuggeschwindigkeit und den Status des Fahrzeuges.

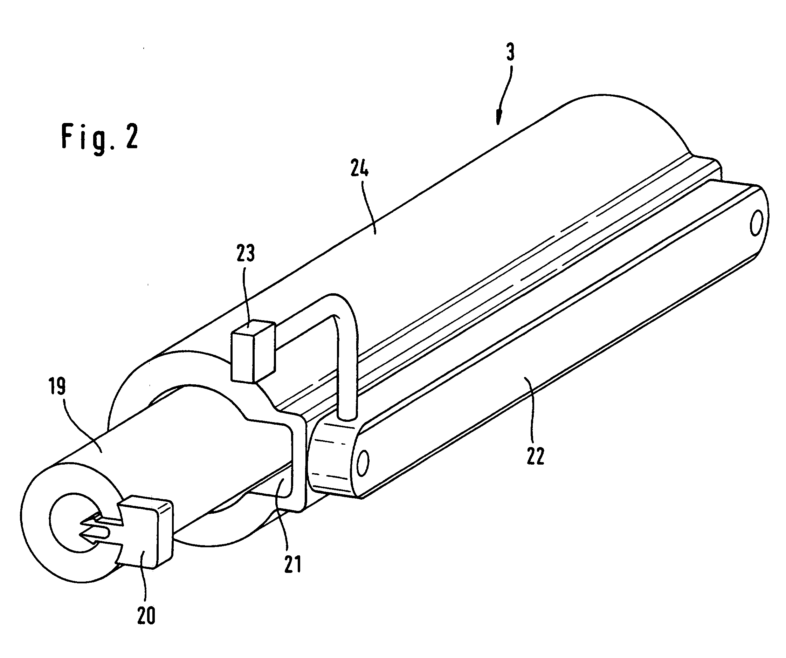

In Figur 2 ist ein Schnitt durch das Lenkgetriebe 3 dargestellt. Das Lenkgetriebe 3 ist als Zahnstangenlenkgetriebe ausgebildet und besteht aus einer Zahnstange 19, welche im Inneren des Lenkgetriebegehäuses 24 geführt ist. An der Zahnstange 19, welche aus Stahl gefertigt ist, ist ein Permanentmagnet 20 ortsfest an einer solchen Stelle der Zahnstange 19 befestigt, welche den Anfang des Messbereiches des zu messenden Lenkposition der Lenksäule 2 darstellt.

Das Lenkgetriebegehäuse 24 weist in seinem Inneren eine Ausnehmung 21 auf, die sich über die gesamte Längserstreckung des Lenkgetriebegehäuses 24 ausdehnt und in welcher während des Betriebes der Lenkhilfe der Magnet 20 durch die Zahnstange 19 innerhalb des Lenkgetriebegehäuses 24 verschoben wird.

An der Außenseite des Lenkgetriebegehäuses 24, an der Magnetaufnahme 21 anliegend, ist eine induktive Aufnehmereinheit 22 angeordnet, welche in ihrer Ausdehnung an den Verschiebeweg der Zahnstange 19 angepasst ist. Die Aufnehmereinheit 22 weist einen Steckeranschluß 23 zur Verbindung mit dem Steuergerät 10 auf.

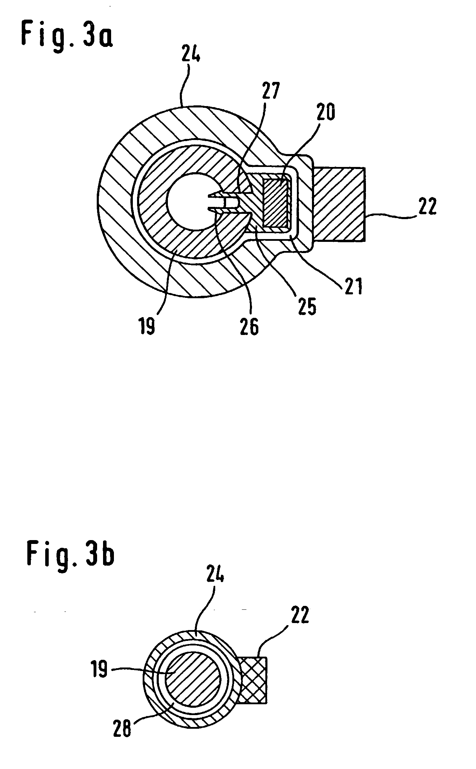

Ausführungsformen des Magneten 20 sollen anhand eines Querschnittes durch das Lenkgetriebegehäuse 24 gemäß Figur 3 erläutert werden.

Aus Figur 3a ist ersichtlich, dass die Zahnstange 19 hohlgebohrt ist. An der Zahnstange 19 ist der Magnet 20, welcher in einem Magnetgehäuse 25 gelagert ist, in der als Nut ausgebildeten Magnetaufnahme 21 geführt. Durch das Lenkgetriebegehäuse 24 hindurch detektiert die induktive Aufnehmereinheit 22 die Position des Magneten 20, der bei Verdrehung der Lenksäule 2 durch eine Bewegung der Zahnstange 19 verschoben wird.

Das Magnetgehäuse 25 ist mittels einer spreizdübelähnlichen Halterung 26 in eine Bohrung 27 in die Zahnstange 19 derart eingesetzt, dass die Halterung 26 die Zahnstange 19 hintergreift. Die Halterung 26 und das Magnetgehäuse 25 bilden dabei eine Einheit und lassen sich einfach in einem Kunststoffspritzprozess herstellen.

In einer anderen Ausführungsmöglichkeit gemäß Figur 3b ist der Magnet 20 als eine die Zahnstange 19 umschließende ringförmige Magneteinrichtung 28 ausgebildet, die formschlüssig außen auf der Zahnstange 19 befestigt ist.

Zur Verdeutlichung der Ausmaße der Anordnung sei angeführt, dass der Außendurchmesser der Zahnstange 19 24 mm beträgt, während der Magnet 20 5x5 mm und die Aufnehmereinheit 22 sowie die Magnetaufnahme 21 ungefähr 200 mm lang sind.

Die erfindungsgemäße elektrische Servolenkung mit am Zahnstangenlenkgetriebe angebrachten linearen Wegsensor ermöglicht zusätzlich die Bereitstellung eines Lenkwinkelsignals für andere Steuergeräte des Kraftfahrzeuges. Das Signal der Aufnehmereinheit 22 wird dabei durch das Signal des für die Kommutierung des Elektromotors 13 ohnehin benötigten Motorwinkelsensors 11a plausibilisiert. Motorwinkel und Zahnstangenweg stehen in proportionalen Zusammenhang, so dass eine redundante Signalerfassung durch das Steuergerät 10 möglich ist. Auf diese Art und Weise wird die Eigensicherheit des zu erfassenden Lenkwinkelsignals erhöht. An sich vorhandene Sensorik kann mit benutzt werden.

Das so gewonnene Lenkpositionssignal wird durch das Steuergerät 10 der elektrischen Servolenkung zu einem Lenkwinkel und Lenkwinkelgeschwindigkeitssignal aufbereitet, dass über den CAN - Bus 15 den anderen Fahrzeugsystemen, beispielsweise dem ESP-Steuergerät 16 zur Verfügung gestellt wird. Die Nutzung vorhandener Schnittstellen des Steuergerätes 10 der Servolenkung kann auf kostenintensive Winkelsensoren für das ESP verzichtet werden. Das Lenkwinkelsignal ist absolut und unmittelbar nach dem Einschalten des Systems vorhanden d. h. es ist immer eine direkte Signalerfassung vorhanden.

## Patentansprüche

1. Verfahren zur Bestimmung des Lenkwinkels eines Kraftfahrzeuges, bei welchem der Verschiebeweg einer Zahnstange (19) eines Lenkgetriebes (3) detektiert wird, **dadurch gekennzeichnet, dass** aus dem durch einen Lenkradeinschlag verursachten Verschiebeweg der Lenkwinkel unter Berücksichtigung eines vorgegebenen Übersetzungsverhältnisses zwischen Lenkradwinkel und Zahnstangenweg bestimmt wird, und der Lenkwinkel durch ein zur Kommutierung genutztes Motorpositionssignal eines zur Lenkunterstützung vorgesehenen Antriebsmotors (11) plausibilisiert wird.

2. Verfahren nach Anspruch 1 **dadurch gekennzeichnet, dass** der Lenkwinkel der Ermittlung weiterer Fahrzeugfunktionen zugrunde gelegt wird.

3. Verfahren nach Anspruch 2, **dadurch gekennzeichnet, dass** der Lenkwinkel zum Einsatz für mindestens eine Lenkungszusatzfunktion, wie aktive Dämpfung und/oder Lenkrückstellung ermittelt wird.

4. Verfahren nach Anspruch 3, **dadurch gekennzeichnet, dass** die den Lenkwinkel charakterisierenden Daten von einem ersten, die Lenkungszusatzfunktion realisierenden Steuergerät (10) zu einem zweiten, eine weitere Fahrzeugfunktion steuernden Steuergerät (16, 17, 18) über einen Datenbus (15) des Kraftfahrzeuges übertragen wird.

5. Einrichtung zur Ermittlung des Lenkwinkels eines Kraftfahrzeuges, bei welchem ein Lenkgetriebe (3) mit einer Spurstange verbunden ist, wobei ein Positionssensor (22) an dem als Zahnstangengetriebe ausgebildeten Lenkgetriebe (3) angeordnet ist und die mittels des Positionssensors (22) erfasste Position des Zahnstangengetriebes der absoluten Stellung einer Lenkwelle (2) entspricht, **dadurch gekennzeichnet, dass** der lineare Positionssensor (20,22) mit einem Steuergerät verbunden ist und das Steuergerät (10) zur Plausibilisierung des Lenkwinkelsignals mit einem für die Kommutierung des Antriebsmotors genutzten Motorwinkelsensors verbunden ist, welcher an dem Antriebsmotor (11) angeordnet ist, der zur Lenkunterstützung in einer Wirkverbindung mit dem mit der Lenkwelle verbundenen Lenkgetriebe (3) steht.

6. Einrichtung nach Anspruch 5, **dadurch gekennzeichnet, dass** das Steuergerät (10) aus dem Verschiebeweg der Zahnstange (19) des Zahnstangengetriebes (3) den Lenkwinkel und/oder die Lenkgeschwindigkeit und/oder die Lenkrichtung berechnet.

7. Einrichtung nach Anspruch 6, **dadurch gekennzeichnet, dass** das erste Steuergerät (10) über eine Datenleitung (15) mit mindestens einem weiteren Steuergerät (16, 17, 18) verbunden ist, über welche der vom ersten Steuergerät (10) ermittelte Lenkwinkel und/oder Lenkgeschwindigkeit und/oder die Lenkrichtung an das zweite Steuergerät (16, 17, 18) übertragbar ist, wobei das zweite Steuergerät (16, 17, 18) den Lenkwinkel und/oder die Lenkgeschwindigkeit für seine Steuer- und/oder Regelfunktionen weiterverarbeitet.

8. Einrichtung nach Anspruch 5, **dadurch gekennzeichnet, dass** der lineare Positionssensor (20, 22) zur Erfassung der Position des Zahnstangenlenkgetriebes (3) nach einem berührungslose Wirkprinzip arbeitet.

9. Einrichtung nach Anspruch 8, **dadurch gekennzeichnet, dass** der lineare Positionssensor eine Magneteinrichtung (20) und eine induktive Aufnehmereinheit (22) aufweist, wobei die Magneteinrichtung (20) mit der Zahnstange (19) des Zahnstangengetriebes (3) fest verbunden ist und die induktive Aufnehmereinheit (22) in/oder an einem Gehäuse (24) des Zahnstangengetriebes (3) angeordnet ist, wobei sich die induktive Aufnehmereinheit (22) abhängig vom gesamten Verschiebeweg der Zahnstange (19) ausdehnt.

10. Einrichtung nach Anspruch 9, **dadurch gekennzeichnet, dass** die induktive Aufnehmereinheit (22) außen an dem Gehäuse (24) des Lenkgetriebes (3) befestigt ist.

11. Einrichtung nach Anspruch 9, **dadurch gekennzeichnet, dass** die Magneteinrichtung (20, 28) mechanisch an der Zahnstange (19) arretiert ist.

12. Einrichtung nach Anspruch 9, **dadurch gekennzeichnet, dass** die Magneteinrichtung (28) die Zahnstange (3) annähernd umfasst.

13. Einrichtung nach Anspruch 12, **dadurch gekennzeichnet, dass** die Magneteinrichtung (20) in einem Magnetgehäuse (25) angeordnet ist, welches mit mindestens einem Mittel (26) zur form- und / oder kraftschlüssigen Befestigung an der Zahnstange (19) verbunden ist.

14. Einrichtung nach Anspruch 13, **dadurch gekennzeichnet, dass** die Zahnstange (19) hohl gebohrt ist und das Befestigungsmittel (26) durch eine Bohrung (27) der Zahnstange (19) diese im Inneren hintergreift.

15. Einrichtung nach Anspruch 13 oder 14, **dadurch gekennzeichnet, dass** das Magnetgehäuse (25) und das Befestigungsmittel (26) einstückig als Kunststoffspritzteil ausgebildet sind.

16. Einrichtung nach Anspruch 9 und 11, **dadurch gekennzeichnet, dass** das Gehäuse (24) des Zahnstangengetriebes (3) eine in der Erstreckungsrichtung der Zahnstange (19) ausgebildete Magneteinrichtungsaufnahme (21) aufweist.

## Claims

1. Method for determining the steering angle of a motor vehicle, in which the displacement travel of a rack (19) of a steering gear (3) is detected, **characterized in that** the displacement travel, caused by a steering wheel deflection, the steering angle being determined from said displacement travel, taking into account a predetermined transmission ratio between the steering-wheel angle and the rack travel, and the steering angle is validated by a motor position signal used for commutating from a drive motor provided for steering assistance.

2. Method according to Claim 1, **characterized in that** the steering angle is taken as a basis for determining further vehicle functions.

3. Method according to Claim 2, **characterized in that** the steering angle is determined so as to be used for at least one additional steering function, such as active damping and/or steering return.

4. Method according to Claim 3, **characterized in that** the data characterizing the steering angle are transmitted via a data bus (15) of the motor vehicle from a first control unit (10) implementing the additional steering function to a second control unit (16, 17, 18) controlling a further vehicle function.

5. Device for determining the steering angle of a motor vehicle, in which a steering gear (3) is connected to a track rod, in which a position sensor (22) is arranged on the steering gear (3) designed as a rack mechanism and the position of the rack mechanism detected by means of the position sensor (22) corresponding to the absolute position of the steering shaft (2), **characterized in that** the linear position sensor (20, 22) is connected to a control unit and for validating the steering-angle signal, the control unit (10) is connected to a motor angle sensor used for commutating the drive motor, which motor angle sensor is arranged on a drive motor (11) which is operatively connected to the steering gear (3) connected to the steering shaft for steering assistance.

6. Device according to Claim 5, **characterized in that** the control unit (10) calculates the steering angle and/or the steering speed and/or the steering direction from the displacement travel of the rack (19) of the rack mechanism (3).

7. Device according to Claim 6, **characterized in that** the first control unit (10) is connected to at least one further control unit (16, 17, 18) via a data line (15), via which the steering angle and/or steering speed and/or steering direction determined by the first control unit (10) can be transmitted to the second control unit (16, 17, 18), the second control unit (16, 17, 18) further processing the steering angle and/or steering speed for its control and/or regulating functions.

8. Device according to Claim 5, **characterized in that** the linear position sensor (20, 22) for detecting the position of the rack-type steering mechanism (3) operates on a non-contact operating principle.

9. Device according to Claim 8, **characterized in that** the linear position sensor has a magnetic device (20) and an inductive transducer unit (22), the magnetic device (20) being firmly connected to the rack (19) of the rack mechanism (3), and the inductive transducer unit (22) being arranged in or on a housing (24) of the rack mechanism (3), the inductive transducer unit (22) extending as a function of the entire displacement travel of the rack (19).

10. Device according to Claim 9, **characterized in that** the inductive transducer unit (22) is fastened to the outside of the housing (24) of the steering gear (3).

11. Device according to Claim 9, **characterized in that** the magnetic device (20, 28) is detained mechanically on the rack (19).

12. Device according to Claim 9, **characterized in that** the magnetic device (28) approximately surrounds the rack (3).

13. Device according to Claim 12, **characterized in that** the magnetic device (20) is arranged in a magnet housing (25) which is connected to the rack (19) by at least one means (26) for positive and/or non-positive fastening.

14. Device according to Claim 13, **characterized in that** the rack (19) is bored hollow and the fastening means (26) engages behind the rack (19) on the inside through a bore (27) of the latter.

15. Device according to Claim 13 or 14, **characterized in that** the magnet housing (25) and the fastening means (26) are formed in one piece as a plastic injection molding.

16. Device according to Claim 9 and 11, **characterized in that** the housing (24) of the rack mechanism (3) has a magnetic-device receptacle (21) formed in the direction of extent of the rack (19).

## Revendications

1. Procédé pour la détermination de l'angle de braquage d'un véhicule automobile, au cours duquel le chemin parcouru par la crémaillère (19) d'un mécanisme de direction (3) est détecté, **caractérisé par le fait qu'**on détermine, à partir du chemin parcouru provoqué par un braquage du volant de direction, l'angle de braquage en tenant compte d'un rapport de démultiplication donné entre l'angle de rotation du volant de direction et le chemin parcouru par la crémaillère et la plausibilité de l'angle de braquage est contrôlée par un signal de position angulaire du moteur utilisé pour la commutation d'un moteur de commande (11) prévu pour l'assistance à la direction.

2. Procédé selon la revendication 1, **caractérisé par le fait que** l'angle de braquage sert de base à la détermination d'autres fonctions du véhicule.

3. Procédé selon la revendication 2, **caractérisé par le fait que** l'angle de braquage est déterminé pour être utilisé pour au moins une fonction supplémentaire de direction, telle que l'amortissement actif et/ou le retour de la direction.

4. Procédé selon la revendication 3, **caractérisé par le fait que** les données caractérisant l'angle de braquage sont transmises sur un bus de données (15) du véhicule automobile, par un premier appareil de commande (10) réalisant la fonction supplémentaire de direction, à un deuxième appareil de commande (16, 17, 18) contrôlant une autre fonction du véhicule.

5. Dispositif pour la détermination de l'angle de braquage d'un véhicule automobile, dans lequel un mécanisme de direction (3) est lié à une barre d'accouplement, où un capteur de position (22) est placé sur le mécanisme de direction (3) conçu comme mécanisme à crémaillère et où la position du mécanisme à crémaillère détectée au moyen du capteur de position (22) correspond à la position absolue d'un arbre de direction (2), **caractérisé par le fait que** le capteur linéaire de position (20, 22) est relié à un appareil de commande et l'appareil de commande (10) est relié, pour contrôler la plausibilité du signal de l'angle de braquage, à un détecteur de la position angulaire du moteur utilisé pour la commutation du moteur de commande, lequel détecteur est monté sur le moteur de commande (11) qui concourt, pour l'assistance à la direction, avec le mécanisme de direction (3) lié à l'arbre de direction.

6. Dispositif selon la revendication 5, **caractérisé par le fait que** l'appareil de commande (10) calcule, à partir du chemin parcouru par la crémaillère (19) du mécanisme à crémaillère (3), l'angle de braquage et/ou la vitesse de braquage et/ou la direction du braquage.

7. Dispositif selon la revendication 6, **caractérisé par le fait que** le premier appareil de commande (10) est relié à au moins un autre appareil de commande (16, 17, 18) par l'intermédiaire d'un canal de données (15), sur lequel l'angle de braquage et/ou la vitesse de braquage et/ou la direction de braquage déterminés par le premier appareil de commande (10) peuvent être transmis au deuxième appareil de commande (16, 17, 18), le deuxième appareil de commande (16, 17, 18) traitant l'angle de braquage et/ou la vitesse de braquage pour ses fonctions de commande et/ou de régulation.

8. Dispositif selon la revendication 5, **caractérisé par le fait que** le détecteur linéaire de position (20, 22) fonctionne selon un mode de fonctionnement sans contact pour détecter la position du mécanisme de direction à crémaillère (3).

9. Dispositif selon la revendication 8, **caractérisé par le fait que** le capteur linéaire de position comporte un dispositif à aimant (20) et une unité inductive de captage (22), le dispositif à aimant (20) étant lié d'une façon stationnaire à la crémaillère (19) du mécanisme à crémaillère (3) et l'unité inductive de captage (22) étant placée dans/ou sur un boîtier (24) du mécanisme à crémaillère (3), l'étendue de l'unité inductive de captage (22) étant fonction de la totalité du chemin parcouru par la crémaillère (19) .

10. Dispositif selon la revendication 9, **caractérisé par le fait que** l'unité inductive de captage (22) est fixée à l'extérieur sur le boîtier (24) du mécanisme de direction (3) .

11. Dispositif selon la revendication 9, **caractérisé par le fait que** le dispositif à aimant (20, 28) est fixé d'une façon mécanique sur la crémaillère(19).

12. Dispositif selon la revendication 9, **caractérisé par le fait que** le dispositif à aimant (28) embrasse approximativement la crémaillère (3).

13. Dispositif selon la revendication 12, **caractérisé par le fait que** le dispositif à aimant (20) est placé dans un boîtier d'aimant (25), qui est lié à au moins un moyen (26) permettant la fixation à la crémaillère (19) par assemblage géométrique et/ou par assemblage serré.

14. Dispositif selon la revendication 13, **caractérisé par le fait que** la crémaillère (19) est creuse et que le moyen de fixation (26) s'accroche à celle-ci et derrière sa paroi à travers un alésage (27) dans la crémaillère (19) .

15. Dispositif selon la revendication 13 ou 14, **caractérisé par le fait que** le boîtier de l'aimant (25) et le moyen de fixation (26) sont conçus en une seule pièce en tant que pièce injectée en matière plastique.

16. Dispositif selon la revendication 9 ou 11, **caractérisé par le fait que** le boîtier (24) du mécanisme à crémaillère (3) comporte un logement (21) conçu dans le sens de la longueur de la crémaillère (19) pour le dispositif à aimant.
